# EUROPEAN PATENT APPLICATION

(11) **EP 2 034 317 A1**
(43) Date of publication of application: **11.03.2009**
(21) Application number: 07742931.4
(22) Date of filing: 08.05.2007
(51) Int. Cl.: G01N 35/08, G01N 37/00

(54) **MICRO GENERAL ANALYSIS SYSTEM WITH MECHANISM FOR PREVENTING LEAKAGE OF LIQUID**

(30) Priority: 12.06.2006 JP 2006162778
(71) Applicant: Konica Minolta Medical & Graphic, Inc., Hino-shi, Tokyo 191-8511 (JP)
(72) Inventor: SANDO, Yasuhiro, Hino-shi, Tokyo 191-8511 (JP); HIGASHINO, Kusunoki, Hino-shi, Tokyo 191-8511 (JP); AOKI, Youichi, Hino-shi, Tokyo 191-8511 (JP); NAKAJIMA, Akihisa, Hino-shi, Tokyo 191-8511 (JP)
(74) Representative: Roberts, Mark Peter
(86) International application number: PCT/JP2007/059496
(87) International publication number: WO 2007/145040

(57) **Abstract**

A micro general analysis system comprising an inspection chip provided with a microchannel and a channel opening communicating with a micropump on the upstream side of a reagent containing section, a driving liquid tank containing driving liquid, a micropump unit provided with a plurality of micropumps at respective positions in the plane direction of a sheet of chip such that the upstream side of each micropump communicates with the driving liquid tank and a channel opening communicating with the microchannel of the inspection chip is provided on the downstream side, and a system body containing the micropump unit and the driving liquid tank in one containing body, wherein analysis is performed while the inspection chip is attached to the system body, and a mechanism for altering the direction of pressure at the channel opening of the micropump unit depending on attachment/detachment of the inspection chip to/from the system body is provided.

## Description

### FIELD OF THE INVENTION

The present invention relates to an micro total analysis system wherein an analyte and a reagent is mixed to react and a target substance in the analyte is analyzed using an examination chip provided with a successive micro flow path to detect the aforesaid reaction.

### PRIOR ART

In recent years, using micro machine technologies and ultra micro fabrication technologies, there has been developed a system where miniaturized devices (for example, a pump, valve, flow path and sensor) to conventional conduct preparation of the analyte, chemical analysis, and chemical synthesis are integrated on a chip (Patent Document 1). The chip so-called µ-TAS (Micro Total Analysis System), Bio Reactor, Lab-On-chip or Bio Chip is expected to be expanded in application in fields of medical examination and diagnosis, environmental measuring and agricultural production.

In each analysis and inspection, quantitative performance of analysis, accuracy of analysis and economic efficiency in the examination chip is important. Therefore, it is an object to establish a fluid feeding system having a high reliability with a simple structure. A micro fluid control element having a high accuracy superior in the reliability is desired. Micropump systems and control methods suitable for the above object have been suggested by the inventors of the present invention (Patent Documents 2 to 4).

When fluid is fed to the micro fluid path of the examination chip using a pump, if leakage of the fluid occurs in middle-course, quantitative fluid feeding becomes difficult and smooth fluid feeding cannot be carried out. A rubber packing is often used for a connection section between the micropump and the chip. It the connection section is wet with the fluid, the connection section thereof tends to cause leakage of the fluid. Thus there is needed a simple mechanism to avoid such leakage of the fluid.

On the other hand, in an mage forming apparatus by inkjet method, there is suggested an apparatus having a negative pressure adjusting mechanism to keep a distance between an fluid surface of ink supply reservoir section containing ink in liquid state an ink ejection port of an inkjet head constant (Patent Document 5). For adjusting the negative pressure, vertical motion of the ink tank or biasing by an elastic substance are used. The above mechanism can maintain stable ejection by compensating fluctuation of the negative pressure generated by ink consumption.
[Patent Document 1] Unexamined Japanese Patent Application Publication No. 2004-28589
[Patent Document 2] Unexamined Japanese Patent Application Publication No. 2001-322099
[Patent Document 3] Unexamined Japanese Patent Application Publication No. 2004-108285
[Patent Document 4] Unexamined Japanese Patent Application Publication No. 2004-270537
[Patent Document 5] Unexamined Japanese Patent Application Publication No. 2006-27166

### DISCLOSURE OF THE INVENTION

### PROBLEMS TO BE SOLVED BY THE INVENTION

For the analysis using the above micro analysis system, beside the inspection chip, there is required various kinds of devices to control liquid feeding in the micro flow path of the chip, reaction and detection of the reaction thereof, for example, a micropump, a detection device, and a thermal control device. Therefore, if leakage of fluid occurs in the devices, a serious problem is caused not only for analysis but functions of each device. An object of the present invention is to provide a mechanism to avoid leakage in fluid feeding securely with a simple configuration.

### MEANS TO SOLVE THE PROBLEMS

A micro total analysis system, having:
an examination chip provided with a succession of a micro flow path and a flow path opening section at an upstream side of a containing position of a reagent in the micro flow path, wherein the flow path opening section is communicated with a micropump;
a drive fluid tank to store a drive fluid which pushes the reagent the upstream side to a downstream side of the micro flow path of the examination chip;
a micropump unit provided with a plurality of the micropumps at each position in a plane direction of a chip, wherein an upstream side of each micropump is communicated with the drive fluid tank and at the downstream side thereof, a flow path opening section communicated with the micro flow path of the examination chip is provided;
a system main body wherein the micropump unit and the drive fluid tank are integrated and stored in a containing body; and
a mechanism to change a direction of liquid feeding pressure at the flow path opening section of the micropump unit in response to detaching and attaching of the examination chip while carrying out analysis of the analyte in a state where the examination chip is attached to the system device main body;
   wherein after the examination chip is connected to the micropump unit in a way that the flow path opening sections are overlapped, the micropump feeds the drive fluid to the micro flow path of the examination chip to push out the reagent to the downstream side so that the reagent and the analyte are merged and reacted, and the reaction is detected, whereby a target substance in the analyte is analyzed.
   It is preferred that all the micropumps in the micropump unit are connected to a single drive fluid tank so that the drive fluid contained in the drive fluid tank is fed through each micropump to the micro flow path of the examination chip.
   It is characterized in that a pressure opposite to an ejection direction of the micropump is applied at the flow path opening section of the micropump unit being connected to the examination chip at least when the examination chip is detached from the flow path opening section of the micropump unit.
   It is preferred that the pressure opposite to the ejection direction of the micropump is applied as a negative pressure at the flow path opening section of the micropump unit being connected to the examination chip only when the examination chip is detached from the flow path opening section of the micropump unit.
   The opposite pressure or the negative pressure can be created by lowering a fluid surface of the drive fluid tank than a connection section to the examination chip. This can be realized by that the drive fluid tank can be moved up and down.
   The direction of the pressure of the drive fluid at the flow path opening section of the micropump unit can be altered through a negative pressure generation mechanism attached to a cartridge type drive fluid tank.
   It is preferred that the negative pressure generation mechanism creates the pressure through a bias force based on a restitution force of an elastic substance.
   It is preferred that an absolute value of the above negative pressure is 5 mmAq at a maximum.
   The micro total analysis system of the present invention has;
   a first flow path, wherein a flow path resistance varies with a pressure difference,
   a second flow path, wherein a change rate of the flow path resistance in respect to a change of the pressure difference is smaller than that of the first flow path,
   a pressure chamber connected to the first flow path and the second flow path, and an actuator driven by voltage so as to change an inner pressure of the pressure chamber.

### EFFECTS OF THE INVENTION

In the micro total analysis system of the present invention, analysis of a target substance in the analyte is carried out while the inspection chip is being attached to the system device main body. Since the micro total analysis system of the present invention has a mechanism to alter a direction of pressure at a flow path opening section of the micropump unit in response to detaching and attaching of the examination chip from the system device main body, the pump has margin in capacity when fluid is fed and a consistent fluid feeding is possible, thus occurrence of fluid leakage at detaching and attaching the chip can be prevented.

The mechanism to alter the direction of pressure at flow path opening section for the purpose of preventing fluid leakage and a pump mechanism to feed the various kinds of reagents in the micro flow path of the inspection chip to downstream side have simple and compact configurations.

### BRIEF DESCRIPTION OF THE DRAWINGS

Fig. 1 is a system schematic diagram showing a configuration of the micro total analysis system of the present invention.
Fig. 2 is a perspective view showing an embodiment of the micro total analysis system of the present invention.
Fig. 3 is a view showing internal configuration of the system main body of the micro total analysis system in Fig. 2.
Fig. 4 is a perspective view showing an example of a plurality of the micropumps and the flow path arrangement of the chip connection section communicating to the pumps thereof in an embodiment of the micro total analysis system of the present invention.
Fig. 5 (a) shows a conventional method wherein a position of the drive fluid tank stored in the system device main body is fixed.
Fig. 5 (b) shows another conventional method wherein a position of the drive fluid tank stored in the system device main body is fixed.
Figs. 6(a) to (c) show methods to eliminate a water head difference when the examination chip is detached from the system device main body due to hoisting motion of the drive fluid tank.
Figs. 7(a) to (c) are methods where negative pressure generating mechanism utilizing pressure of elastic substance (sponge or spring).
Fig. 8 is a plane view of the examination chip in an embodiment of the micro total analysis system of the present invention.
Fig. 9 is a cross-sectional view of a fluid feeding control section (water repellant valve).
Fig. 10 is a cross-section view of the micropump unit in Fig. 4.

### DESCRIPTION OF SYMBOLS

- 1: Micro total analysis system
- 2: Examination chip
- 3: System device main body
- 11: Micropump unit
- 12: Micropump
- 12a to 12i: Micropump
- 13: Chip connection section
- 14: Opening
- 15: Opening
- 15a to 15c: Opening
- 16a and 16b: Through hole
- 17: Substrate
- 18: Substrate
- 19: Substrate
- 20: Flow path
- 20a to 20C: Flow path
- 21: Piezoelectric element
- 22: Pressure chamber
- 23: First flow path
- 24: Second flow path
- 25: First fluid chamber
- 26: Second fluid chamber
- 31: Pump connection section
- 32a to 32j: Opening
- 33a to 33c: reagent containing section
- 34a and 34b: end section
- 35: Merging section
- 36: Reagent mixing section
- 37: Analyte containing section
- 38: Merging section
- 39: Reacting section
- 40: Detection section
- 51: Fluid feeding control section (water repellent valve)
- 52: Fluid feeding control path
- 53a: and 53b Flow path
- 54: Fluid
- 61: Drive fluid tank
- 62: Containing body
- 63: Chip inserting port
- 64: Display section
- 65: Conveyance tray
- 66: Peltiert element
- 67: Heater
- 68: Light source

- 69: Detection device

### PREFERABLE EMBODIMENT OF THE INVENTION

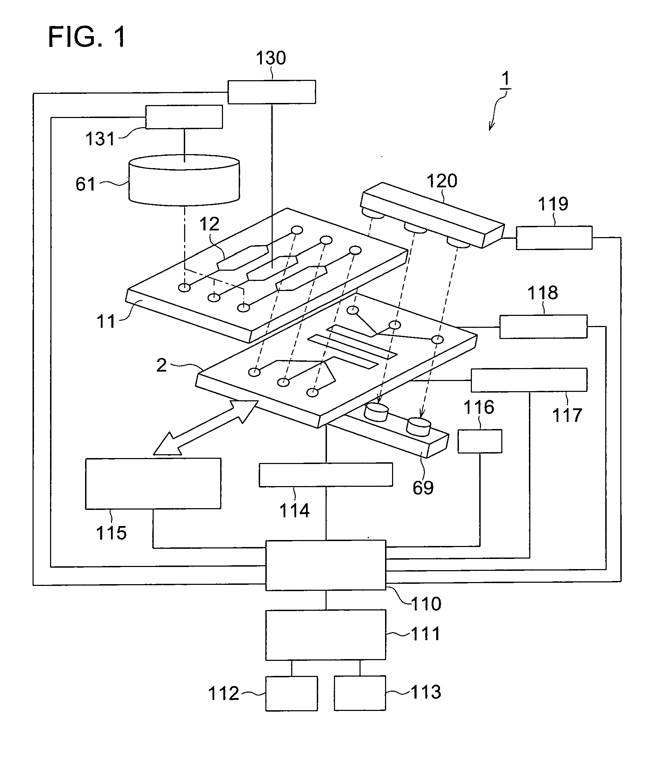

Fig. 1 shows an embodiment of the micro total analysis system of the present invention, having
an examination chip 2 provided with a succession of a micro flow path and a flow path opening section to communicate with a micro pump 11 at an upstream side of a containing position of a reagent in the micro flow path;
a drive fluid tank 61 to contain a drive fluid which pushes the reagent from the upstream side to a downstream side of the micro flow path of the examination chip 2;
a micropump unit 11 provided with a plurality of the micropumps 12 at each position in a surface direction of one examination chip 2, wherein an upstream side of each micropump 12 is communicated with the drive fluid tank 61 and at the downstream side thereof, a flow path opening section communicating with the micro flow path of the examination chip 2 is provided;
a system main body 3 (not illustrated in Fig. 1) wherein the micropump unit 11 and the drive fluid tank 61 are integrated and stored in a storing body; and
a mechanism to change a direction of liquid feeding pressure at the flow path opening section of the micropump unit 11 in response to detaching and attaching of the examination chip 2 while carrying out analysis of the analyte in a state where the examination chip 2 is attached to the system device main body 3;
wherein after the examination chip 2 is connected to the micropump unit 11 in a way that the flow path opening sections are overlapped, the micropump 12 feeds the drive fluid to the micro flow path of the examination chip 2 to push out the reagent to the downstream side so that the reagent and the analyte are merged and reacted, and the reaction thereof is detected, whereby a target substance in the analyte is analyzed.

Further, the system device main body 3 is preferred to be provide with a detection section 69 to detect the reaction in the examination chip 2, a LED control section 119 to control a light emitting section 120 to radiate light onto the examination chip 2, a valve control section 118 to control a vale of the examination chip 2, a heater temperature control section 117 to control temperature of the examination chip 2, a peltiert temperature control section 114, a tray loading mechanism 115, a residual quantity measuring section 131, a pump drive section 130 to drive the micropumps 12, and a control device 110 to control the sections thereof provided in the storing body (Fig. 1). Also, it is preferred to provide a data processing section 111 to process data, a display section 112 to display a result of the data processing, and an input/output section 113 to communicate with outside.

### <Macro total analysis system>

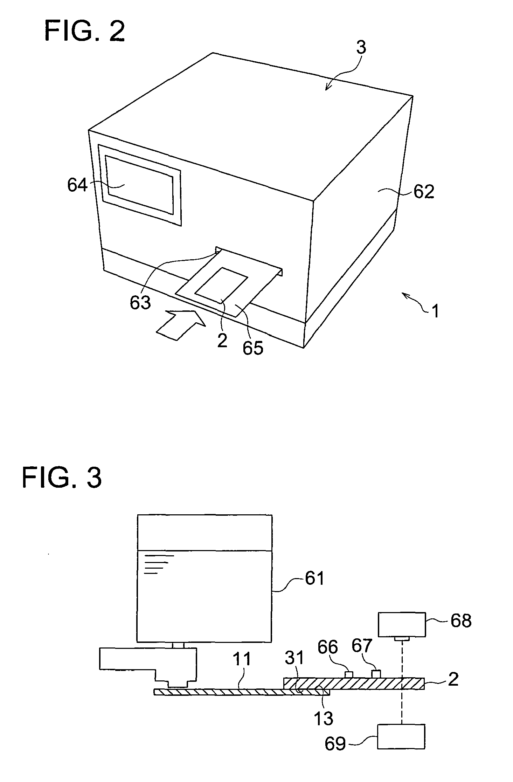

To process a large number of analytes, a method wherein reaction and analysis are carried out by attaching the examination chip to a separate system device main body is preferred. In the present embodiment, the micro total analysis system 1 is configured with the system main body and the examination chip 2 (Fig.1). Fig. 2 is a perspective view showing an example of the micro total analysis system 1. Fig. 3 shows an internal structure of the system main body of the micro total analysis system 1. The micro total analysis system 1 will be described with reference to both drawings thereof. The system device main body 3 is provided with a storing body 62 in a shape of a housing to store each device for analysis. Inside the storing body 62, a chip connection section 13 having a flow path opening to communicate with the examination chip 2 and a micropump unit 11 having a plurality of micropumps (not illustrated in Fig.2) are provided.

Further, inside the storing body 62, a detecting processing device (detection device 69, such as a LED light source 68, a photoelectron magnification tube and a CCD camera to carry out optical detection), and a control device (unillustrated) to control the detection processing device and the micropump unit 11 are provided. Besides, control of fluid feeding through the micropump and control of the detection processing device to detect the reaction in the examination chip 2, the control deice carries out, temperature control of the examination chip 2 through a heating/cooling unit, control of reaction in the examination chip 2, collection (measuring) and processing of the data. The micropump is controlled by applying a drive voltage to the micropump according to a program in which various conditions related to an order of fluid feeding, a flow amount and timing are set.

In the micro total analysis system 1, after the examination chip 2 is set inside the storing body 62 in a state where a pump connection section 31, configured with a flow path opening provided at an upstream side (for example, an upstream side of the reagent containing section and an analyte containing section) in the micro flow path of the examination chip 2, and a chip surface in the vicinity of the flow path opening thereof, is adhered onto a chip connection section 13 of the micropump unit 11 firmly in a fluid-tight state, the target substance in the analyte is analyzed in the examination chip 2. The examination chip 2 is placed on a conveyance tray 65 and entered inside the storing body 62 through a chip insertion opening 63. However, if the examination chip 2 can be set inside the storing body 62 in a state where the examination chip 2 is pressed onto the micropump unit 11, the conveyance tray is not always necessary to be used.

Inside the storing body 62, the heating/cooling unit (peltiert element 66 and heater 67) to partially heat and cool the examination chip 2 is provided at a predetermined position. For example, by adhering the peltiert element onto an area of reagent containing section in the examination chip 2 through crimping, the reagent containing section is selectively cooled. Whereby deterioration of the reagent is prevented, and by adhering the heater 67 onto an area of the flow path configuring the reaction section though crimping, the reaction section is selectively heated, whereby the reaction section is adjusted at an appropriate temperature for reaction.

The micropump unit 11 is connected to one drive fluid tank 61 and the upstream side of each micropump is communicated with the drive fluid tank 61. On the other hand, the downstream side of each micropump is communicated with the flow pass opening provided on one side of the micropump unit 11. The examination chip 2 is connected to the micropump unit 11 in a way that the flow path opening of the each chip communicating with each micorpump is connected with each flow path opening provided at the pump connection section 31 of the examination chip 2.

The micropump feeds an oil base drive fluid such as mineral oil or a water based drive fluid contained in the drive fluid tank 61 to a containing section of each fluid in the examination chip 2 though the chip connection section 13, and pushes the fluid in each containing section to the downstream side with the drive fluid so as to feed the liquid.

A series of analysis process including prior processing, reaction and detection, is carried out in a state where the examination chip 2 is attached to the system main body 1 in which the micropump, the detection processing device and the control device are integrated. Preferably, feeding of the reagent and analyte, prior processing, specific reaction and optical measurement based on mixture are carried out automatically as a succession of consecutive process, and measurement data is stored in a file along with necessary conditions and recording items. In Fig. 2, a result of the analysis is displayed on the display section 64 of the storing body 62.

### <Drive mechanism of fluid in the flow path>

In the analysis system of the present invention, all the micropumps 12 in the micropump units 11 are communicated to the drive fluid tank 61, and the fluid contained in the drive fluid tank 61 is fed to the micro flow path of the examination chip 2 through each micropump 12. The drive fluid is used to feed the regent and the analyte into the micro flow path of the examination chip and to convey the regent and analyte to the specific reaction section and the detection section, as well as to lead the above fluid to the examination chip 2. As above, in order to feed each reagent, all the micropumps 12 are provided for one examination chip 2, and at analysis, the chip connection section 13 (opening section) of the micropump 12 and the pump connection section 31 (opening sectin) of the examination chip 2 are overlapped so that the flow paths on both sides communicate each other, thus the pump mechanism to push the regent in the micro flow path of the examination chip 2 to downstream side can be simplified and compact.

Further, since the plurality of the micropumps commonly use the single drive fluid tank, special piping to connect the drive fluid tank 61 with micropump unit 11 in a shape of a chip or a chip for connection is not necessary. Therefore the pump mechanism to push the regent in the micro flow path of the examination chip 2 to downstream side can be simplified and compact.

It is necessary to firmly connect the connection section between the micropump 12 and the examination chip 2 so as to prevent the fluid leakage. In particular, if the connection section is in a wet condition with the fluid, leakage of the fluid tends to occur when the chip is connected. In the micro chips for analysis, the connection section is usually configured with a rubber packing. Thus if the micropump and the examination chip are connected while such connection sections are wet with the fluid, fluid leakage tends to occur. Thus it has been necessary to prevent the connection sections from being wet so that the fluid leakage does not occur from the connection sections between the micropump and the examination chip.

As a mechanism to prevent such fluid leakage, there is preferred a simple and secure mechanism to alter a direction of the pressure at the flow path opening section of the micropump unit in response to detaching and attaching of the examination chip from the system device main body. Namely, at the flow path opening section of the chip connection section 13 on the micropump unit to be connected with the examination chip, a pressure having opposite direction to the ejection direction of the micropump is applied at least when the examination chip is detached from the opening section (chip connection section 13) of the micropump unit so that occurrence of fluid leakage from the connection section between the micropump unit and the examination chip is prevented. The pressure having opposite direction is about 5 mmAg (or 5 mmH₂O) depending on the pump and size of the ejection port.

The above mechanism is realized by cooperation of the analysis system device main boy and the drive fluid tank of the present invention. As the mechanisms, the present invention suggests a method to change the position of the drive fluid tank and a method to adding a negative pressure generation mechanism to the drive fluid tank. In the both methods, it is necessary to apply the pressure having opposite direction to the ejection direction of the micropump at the flow path opening section of the micropump unit being connected to the chip, at least when the examination chip is detached from the opening section of the micropump unit. This is because, when more than two examination chips are subsequently connected to the same system device main body to carry out analysis subsequently (in particular, when a large number of analyte are to be processed), it is necessary to prevent the opening section of the micropump to be connected to the examination chip from being wet with the fluid leaked. The problem caused by leakage is described in the forgoing. Conventional Exemplary Embodiment

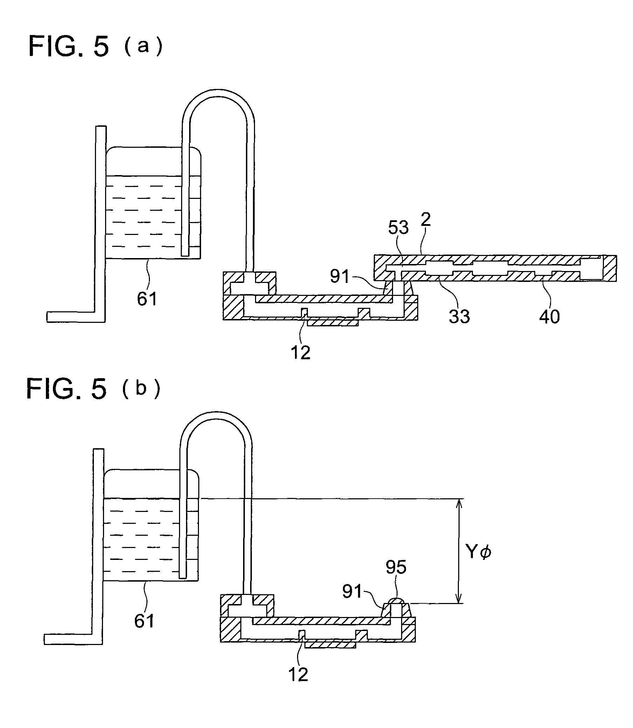

A configuration in Figs. 5 utilizes a conventional drive fluid feeding method. Fig. 5 (a) is a cross-sectional view showing a state where the micropump 12 feeds the drive fluid to the examination chip 2, and Fig. 5(b) is a cross-sectional view showing a state where the examination chip 2 is detached from the micropump 12. As Fig. 5 (a) shows, the flow path 53 of the examination chip 2 is connected to the opening section on an ejection side of the micropump 12 via a rubber packing 91. Also, by locating the examination chip 2, preferably the drive fluid tank, at a position rather higher than the micropump unit, a faint pressure caused by gravity is applied to the micropump unit in the feeding direction thereof so as to realize smooth fluid feeding through the fluid feeding pump. However, as the arrow in Fig. 5 (b) shows, since the fluid surface of the drive fluid tank is at the higher position by Yφ than the position of the chip connection section 95 of the rubber packing 91, the drive fluid always tends to leak out by a water head pressure (a pressure based on height difference between both fluid surfaces) when the fluid feeding pump stops. Thus as Fig. 5 (b) shows, when the examination chip is detached, the drive fluid flows out from the micropump through the connection section by a pressure caused by gravity and spills on the chip connection section 95. Therefore, in the conventional drive fluid feeding method shown by Fig. 5, the drive fluid always tends to flow out when the examination chip is not connected, unless a prevention measure is taken.

### Drive Fluid Tank Hoisting Method

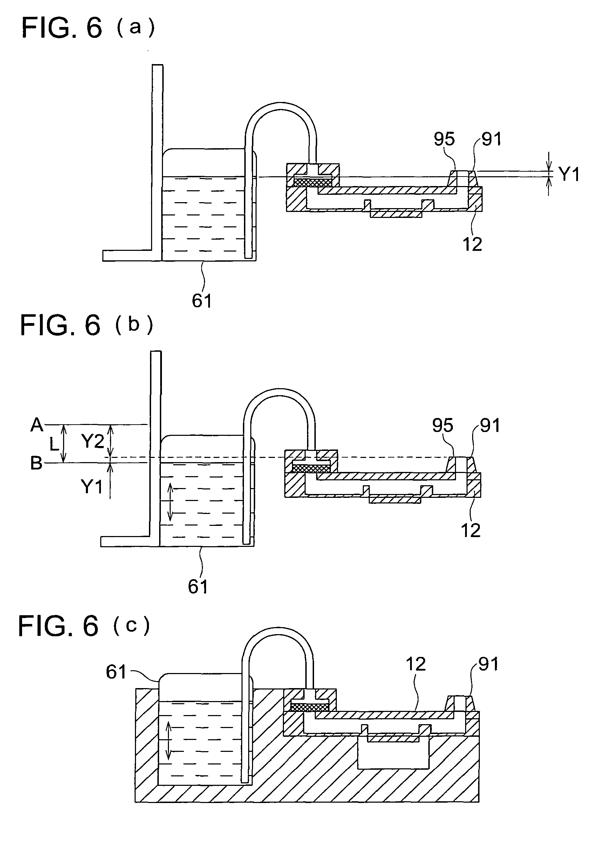

Fig. 6 is explanatory diagrams to explain a configuration of an embodiment of the present invention utilizing drive fluid feeding method. Fig. 6(a) and Fig. 6(b) are cross-sectional view showing a state where the examination chip 2 is detached from the micropump 12. While the examination chip 12 is detached from the opening section of the micropump unit 11 and the micropump is not operating, if the fluid surface of the drive fluid tank is in a position to apply a pressure of + 5 mmAq a at maximum in the ejection direction at the chip connection opening of the micropump unit 11, fluid leakage is not likely to occur. Because of the water repellent characteristic of the rubber packing 91 at the opening section of the connection section, the fluid does not soakingly flow out. For example, as Fig. 6 (a) shows, if the position of the fluid surface in the drive fluid tank 61 is lower than the position of the chip connection section 95 by Y1 as the arrow in the Fig. 6(a) shows, the fluid surface of the drive fluid is at lower position than that of the chip connection section 95, thus the water head pressure becomes zero or negative. In this case, the drive fluid flows in an opposite direction to the ejection direction and the drive fluid does not flow out.

Fig. 6 (b) shows an example where the drive fluid tank 61 is moved up and down direction through a driving mechanism. In the figure, A denotes the fluid surface in the drive fluid tank 61 while the examination chip 2 is connected, and B denotes the fluid surface in the drive fluid tank 61 while the examination chip 2 is disconnected. As explained in Fig. 6 (a), the fluid surface in the fluid drive tank 61 while the examination chip 2 is disconnected is in the position lower than that of the chip connection section 95 by Y1. When the examination chip 2 is connected, the drive fluid tank 61 is ascended through the unillustrated drive mechanism so as to bring the fluid surface in the drive fluid tank 61 to a position of A. Thus, contrarily, the position of the fluid surface in the drive fluid tank 61 becomes higher than the position of the chip connection section 95 by Y2, therefore a pressure in the ejection direction of the micropump 12 can be applied.

In the above embodiment, the drive fluid tank 61 can be moved up and down direction so as to change the fluid surface of the drive fluid appropriately. A motor is used to realize the movement so that the height of the fluid surface can be adjusted appropriately. A position of the fluid surface when the drive fluid tank is lowered and stopped is set in a range where a pressure of +5 mmAg to -5 mmAg is generated. Thus a lower position of the drive fluid tank is also determined to satisfy such pressure rang. If the pressure is greater than + 5 mmAg, there is a danger that the drive fluid leaks out from the chip connection opening section of the micropump. Also, if the pressure is smaller than -5 mmAg, a back-flow of the drive fluid occurs and there is a danger that air babbles go into the flow path and the pump inside. In practice, considering the fluctuation of the fluid surface in the drive fluid tank due to the use of the drive fluid, the position of the drive fluid tank ca be determined based on data from a fluid surface sensor, a measurement of weight of the drive fluid tank, and a result of calculation of fluid consumption on the basis of number of ejection. Or the position of the drive fluid tank can be set at a predetermined position at which the negative pressure is always generated.

As above, in case the drive fluid tank 61 can be moved up and down direction, while the examination chip 2 is connected, the fluid surface is risen to assist the fluid feed through the micropump and when the examination chip 2 is disconnected, the fluid surface is lowered so that the negative pressure is preferably generated to enable prevention of the drive fluid from moving in the ejection direction of the micropump. Incidentally, a fluctuation of the water head pressure caused by descending of the fluid surface in the drive fluid tank due to consumption of the drive fluid falls within the above pressure range or within a fluctuation of the ejection pressure of the micropump.

Fig. 6 (c) is a cross-sectional view showing an example of integration of the micropump and the drive fluid tank 61. In this case, there can be an embodiment where the drive fluid tank is lowered to a predetermined position through a mechanical operation in relation to pump halt and detaching of the examination chip 2.

Incidentally, as another embodiment where the drive fluid tank is relatively moved up and down direction, the micropump unit can be hoisted to relatively eliminate the water head difference.

According to the above mechanism, at fluid feeding, a capacity margin of the micropump is created and consistent fluid feeding becomes possible. Thus occurrence of fluid leakage at detaching the examination chip can be prevented. Method wherein a negative pressure generation mechanism is provided at the drive fluid tank

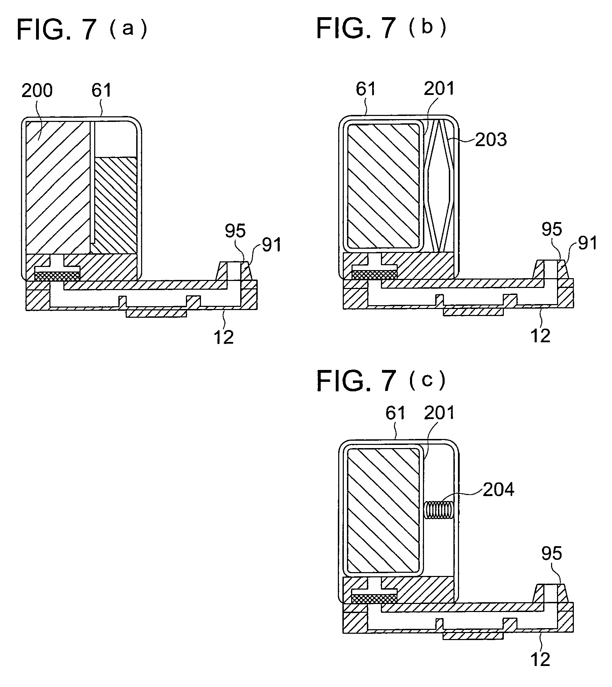

Alteration of the pressure direction at the flow path opening section on the chip connection side of the micropump unit can be realized through a negative pressure generation mechanism instead of hoisting the drive fluid tank. As Fig. 7 is structural diagram of an example of a negative pressure generation mechanism added to the drive fluid tank 61. As Fig. 7 shows the negative pressure generation mechanism added to the cartridge tyep drive fluid tank 61 is preferable. In the method, an embodiment where the micropump and the drive fluid tank are integrated is also preferable. The pressure having the opposite direction to fluid feeding or pump ejection direction can be applied in the flow pass which communicates the micropump and the drive fluid tank, by generating a negative pressure through a negative pressure generation mechanism which is added to the drive fluid tank, but not by positional change of the fluid surface in the drive fluid tank.

As the negative pressure generation mechanism, an embodiment where the negative pressure is generated by a bias force of an elastic substance which tends to return an original position is considered. As the elastic substance provided in the drive fluid tank 61, various things such as a coil spring 204, a leaf spring 203 and a sponge 200 can be used. Specifically, as Fig. 7 (a) shows, an embodiment where a sponge 200 is stuffed in the drive fluid tank 61 (the negative pressure is generated by a force of the sponge 200 to absorb the drive fluid), or an embodiment where an inner cartridge gab 201 in which the drive fluid is contained is pulled by a force of the spring (in the figure, the coil spring 204 or the leaf spring 203) are devised. As above, as far as the negative pressure is generated by the bias force of the elastic substance, kinds and shapes of the elastic substance are no object. In the above method, the mechanism is simple without using electrical power source such as a motor. Therefore, a simple, power saving and low cost device main boy can be realized.

As the drive fluid is fed from the drive fluid tank 61, a position of the elastic substance is changed in accordance with the reducing of fluid amount, thereby a potential force of restitution to return the elastic substance to an original position is generated. When moving of the drive fluid is stopped, based on the bias of the restitution force of the elastic substance, a force having a direction opposite to the previous direction is applied and the negative pressure is generated.

So far, the embodiment in which the negative pressure generation mechanism is added to the cartridge type drive fluid tank has been described. Since the drive fluid tank is a cartridge type, detaching of the tank thereof is easy. Also, the negative pressure generation mechanism is not limited to the embodiment in the forgoing. Meanwhile, the cartridge type drive fluid tanks can be connected respectively to individual micropumps.

The negative pressure to be generated conforms with that of the tank hoisting method thus a negative pressure of up to -5 mmAg is preferable to be generated. In the same manner, the position of displacement of the elastic substance is determined so as to generate the above negative pressure based on data such as the result of calculating the drive fluid consumption amount on the basis of number of ejection time.

By adding the above negative pressure generating mechanism to the drive fluid tank 61, a marginal capacity is created to the micropump when feeding the fluid, and consistent fluid feeding becomes possible. Further, leakage of liquid at detaching the examination chip 2 does not occur.

### <Examination Chip>

In the examination chip 2 used in the present embodiment, each flow path element and structural sections are allocated functionally in appropriate positions with a microfabricating technology so that the examination chip 2 is used as a micro reactor in chemical analysis, various examinations, and processing/separating of the analyte.

On the examination chip 2, a plurality of reagent containing sections to contain various the reagents are provided, in which reagents, washing liquid and denaturation process liquid used for a specific reaction are contained, because reagents are preferred to be contained in advance to hasten the examination at any time and place.

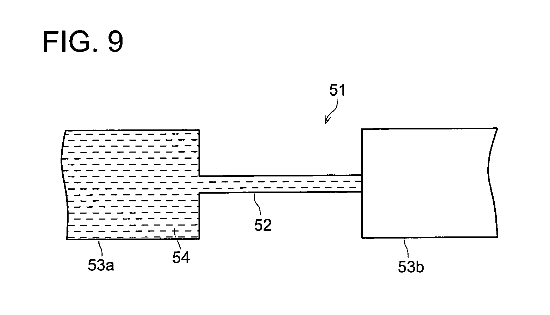

The examination chip 2, for example, can be configured with a groove forming substrate in which a groove is formed on the substrate surface to form a flow path, and a covering substrate which is adhered onto the groove forming substrate thereof. On the groove forming substrate, each structure section and a flow path communicating with the structure section are formed. As an specific example of such structure, there is cited a fluid feeding control section such as each containing section (reagent containing section and analyte containing section), a fluid reservoir such as a waste fluid reserving section, a valve base section, fluid feeding control section (a water repellent valve indicated in Fig. 9 to be described later), a reverse flow preventing valve (check vale and active valve), a reagent quantitative determination section, mixing section, and reaction section and detection section. Such structural sections and flow path can be formed on the covering substrate. By adhering the covering substrate onto the groove forming substrate to cover the above structural sections and flow paths, the examination chip is formed. Meanwhile, to optically detect the reaction in the examination chip, an optical transparency covering substrate has to be adhered so that at least the detection section within the above structural sections is covered by the optical transparency covering substrate thereof. Also, more than three substrates can be laminated to form the examination chip 2.

The examination chip 2 is usually formed by combining more than one forming material appropriately. As the forming material of the examination chip 2, for example, plastic resin, various kinds of inorganic glasses, silicon, ceramic and metal are cited.

Among them, for the examination chip intended for a large number of analytes, particularly a clinical analyte having a risk of influence or exposure, disposability is desired. Further, from a view point that to provide capability of various applications and mass productivity is preferred, use of the plastic resin for the forming material of the examination chip is preferred.

For the substrate such as groove forming substrate on which the flow path is formed, there is preferred a plastic having a repellent character and hydrophobic character wherein distortion of the flow path due to absorption of the fluid is not likely to occur, thus a small amount of analyte fluid can be fed without any loss. For such material, resins such as polystyrene, polyethylene, polypropylene, polyethylene terephthalate, polyethylene naphthalate, polyethylene vinyl alcohol, polycarbonate, polymethylpentene, fluorocarbon, saturated cyclic polyolefin are cited.
In case heating at around 100° C is required by the analysis, resins superior in heat resistance, for example, polycarbonate, polyimide, polyetherimide polybenzimidazole, polyether ketone are used for the material of the substrate.

The flow path of the examination chip 2, as the micro reactor, is formed on the substrate in accordance with a flow path arrangement designed in advance to suit purposes. The flow path in which the fluid flows is a micro flow path having a width in micro meter order, i.e. a width of several tens to several hundreds µm, preferably 50 to 200µm, and a depth of 25 to 300µm, preferably 50 to 100µm. As the width of the flow path becomes narrow, the flow path resistance increases, thus a problem of fluid feeding may occur. If the width of the flow path is too wide, an advantage of micro scale space is spoiled. An over all lateral and longitudinal size of examination chip 2 is typically several tens mm and the height is several mms.

Each structural section and the flow path of the substrate can be formed through a conventional microfabricating technology. Typically, transfer of micro structure through photo lithography technology using photoconductive resin is preferable. By utilizing the transfer structure thereof, removing of unnecessary portions, adding of necessary portions, and transferring of shapes are carried out. For example, a pattern to form the structural element of the examination chip is formed by the photo lithography technology, and the pattern thereof is formed on a resin through transfer. As a basic material of the substrate on which the micro flow path of the micro reactor is formed, plastic resins superior in mechanical characteristics where structures in sub micron order can be accurately transferred is preferably used. In particular polystyrene and polydimethylsiloxane are superior in characteristics of shape transfer. Each structural section and the flow path on the substrate can be formed through injection molding and extrusion molding where needed.

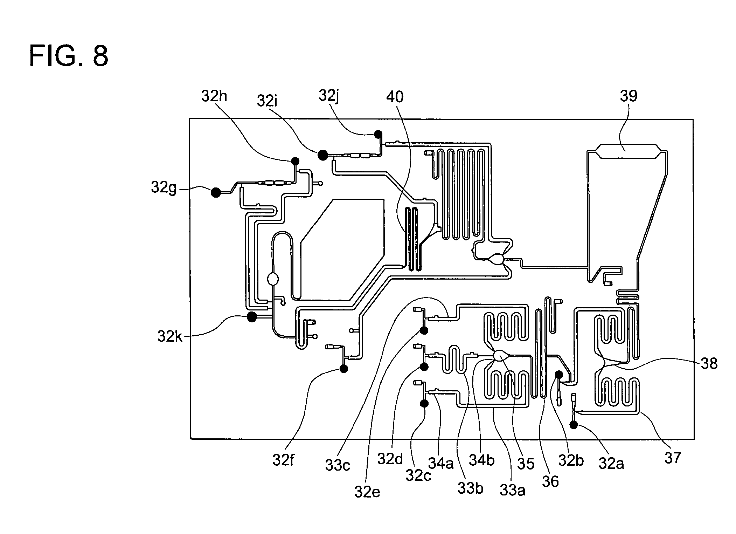

At an upstream side in the micro flow path of the examination chip, for example, at an upstream side of the containing section to contain each fluid such as, reagent and analyte, a pump connection section to connect other micropump is provided. At the pump connection section, a flow path opening section communicating with the aforesaid containing section is provided, and the drive fluid is supplied from the micropump through the flow path opening, thus fluid in each containing section is pushed to the downstream side. Flow of the fluid through such flow path will be described in Fig. 8 specifically. Fig. 8 is a plane view of an examination chip in an embodiment of the micro total analysis system of the present invention. In the examination chip 2, three reagents are contained in a total of three flow paths i.e. the reagent containing sections 33a, 33b and 33c. At both ends of the reagent containing sections (in the reagent containing section 33a, an end section 34a at an upper stream side and an end section 34b at a downstream side) the fluid feeding control section (water repellent valve) having the structure shown by Fig. 9 is provided. The reagent is encapsulated in the flow path between the water repellent valves.

Fig. 9 is a cross-sectional view of the fluid feeding control section (water repellent valve). The fluid feeding control section 51 is provided with a fluid feeding control path 52. A cross-sectional area (a cross-sectional area vertical to the flow path) of the fluid feeding control path 52 is smaller than the cross sectional areas of a flow path 53a at an upstream side and flow path 53b at a downstream side.

If the flow path wall is formed with a hydrophobic material such as a plastic resin, a fluid 54 in contact with fluid feeding control path 52 is restricted by a difference of the surface tensions between the flow path walls to pass through towards the flow path 53b at the downstream side.

To flow out the fluid 54 to the flow path 53b at the downstream side, the micropump applies a fluid feeding pressure which is more than a predetermined pressure, whereby the fluid 54 is pushed from the fluid control path 52 to the fluid path 53b at the downstream side against the surface tension. After the fluid 54 flows out to the flow path 53b, the fluid flows to the flow path 53b at downstream side without maintaining the fluid feeding pressure required to push out a front end of the fluid 54 to the flow path at the downstream side. Namely, Passing of the fluid through the fluid feeding control path 52 is interrupted until the fluid feeding pressure in the positive direction from an upstream side to a downstream side reaches to a predetermined pressure, and when the fluid feeding pressure more than the predetermined pressure is applied, the fluid 54 passes through the fluid feeding control path 52.

Incidentally, though the specific description is omitted, in the micro flow path of the examination chip 2,in Fig. 8, the fluid feeding control sections 51 in Fig. 9 are provided other than at the positions of the both ends of the reagent containing sections 33a to 33c. For example, the fluid feeding control sections is provided at an end section at a merging section 38 side of the reagent mixing section 36 and the analyte containing section 37 to control timing to start fluid feeding to the flow path onward.

At an upstream side of the reagent containing sections 33a to 33c in Fig. 8, openings 32c to 32e to open one surface of the chip 2 to outside are provided. The openings 32c to 32e are matched with the flow path openings provided on a connection surface (chip connection section) of the micropump unit to be communicated with the micropumps, when the examination chip 2 is overlapped and connected with the chip connection section of the micropump unit described later.

Meanwhile, the openings 32a, 32b and 32f to 32j are also communicated with the micropumps by connecting the examination chip 2 with the chip connection section of the micropump unit. The pump connection section 31 is configured with a surface including the openings 32 a to 32j, and by adhering the pump connection section 31 with the connection surface (chip connection section) of the micropump unit, the examination chip 2 and the micropump unit 11 are connected. In the pump connection section 31, it is preferred that an adhering surface is formed with flexible resins (having elasticity and shape subserviency characteristic) such as polytetrafluoroethylene and silicone resins, so as to prevent leakage of the drive fluid by ensuring a necessary packinging performance. Such adhering surface having a flexibility can be realized by the substrate itself configuring the examination chip, or by a separate material having flexibility adhered on a vicinity of the flow path opening on the pump connection section.

The reagents contained in the flow paths 33a to 33c flow into the merging section 35 passing through the fluid feeding control section 51 of Fig. 9 with individual micropumps communicating to the openings 32c to 32e so as to be with mixed three kinds of reagents at reagent mixing section 36 representing a successive flow pass.

The mixed reagent 36 mixed in the reagent mixing section 36 is merged with an analyte stored in the analyte containing section 37 at merging section 38. Incidentally, the mixed reagent is pushed out to the downstream side with the drive fluid through the micropump communicating to the opening 32b, and the analyte is pushed out to the downstream side with the drive fluid through the micropump communicating to the opening 32a. A mixed fluid of the mixed reagent and the analyte is contained in a reaction section 39 and reaction starts by heating.

The fluid after reaction is fed to a detection section 40, and a target substance is detected through an optical detection method. Meanwhile, the individual pumps respectively communicating to the openings 32f to 32j push out respective reagents (for example, fluid to cease reaction of mixed reagent and analyte, fluid to carried out a necessary process such as labeling the target substance of analysis, and washing fluid) contained in advance in the flow paths after the openings at predetermined timing to downstream side.

### <Micropump unit>

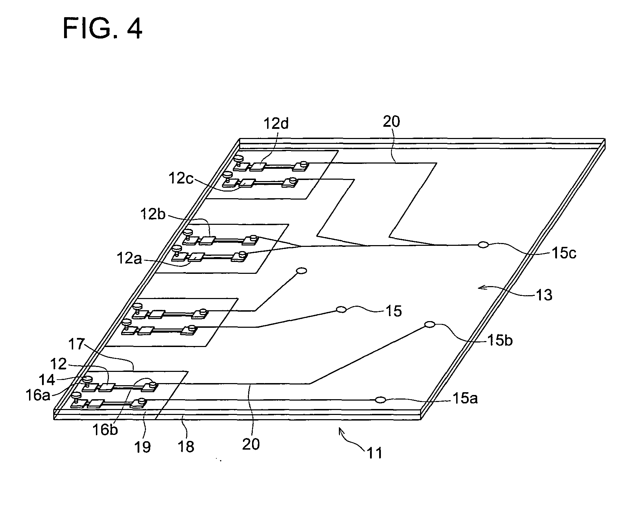

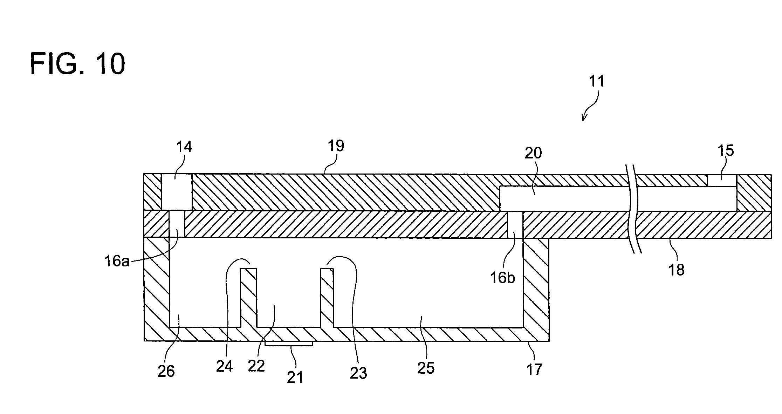

Fig. 4 is a perspective view of the micropump unit in an embodiment of the micro total analysis system of the present invention, and Fig. 10 is a cross-sectional view of the view thereof. The micropump unit 11 is preferably configured with a substrate 17 formed with silicon, a substrate 18 formed with glass thereon and a substrate 19 formed with glass thereon. The substrates 17, 18 and 19 are bonded with anodic bonding, direct bonding or an adhesive. Meanwhile, the materials of the substrates are only exemplary materials.

The micropump 12 (piezoelectric pump) is configured with an inner space between the substrate 17 formed with silicon and the substrate 18 formed with glass bonded through the anodic bonding thereon.

The substrate 17 is a silicon wafer on which a predetermined shape is formed by lithography technology. There are formed a pressure chamber 22, a first flow path 23, a first fluid chamber 25, a second flow path 24, and a second fluid chamber 26, through microfabrication including, for example, forming of an oxide film on the silicon substrate surface, application of registration, exposure and development of the registration, etching of the oxide film, and etching of silicon through IPC (inductively Coupled Plasma).

At a position of the pressure chamber 22, the silicon substrate is formed into a diaphragm, and a piezoelectric element 21 formed with titanic acid lead zirconate (PZT) ceramic is adhered thereon,

The micropump is driven by a control voltage applied to the piezoelectric element 21 as follow. The piezoelectric element 21 vibrates with an applied voltage having a predetermined wave shape and the silicon diaphragm at the position of the pressure chamber 22 vibrates, whereby a volume of the pressure chamber 22 increases and decreases. The first flow path 23 and the second flow path 24 are the same in width and depth, and the second flow path is longer than the first flow path in length. In the first flow path 23, as the pressure difference increases, turbulent flow which flows whirls is generated to increase flow path resistance. On the other hand, in the second flow path, because of long flow path, a laminar flow tends to occur even if the pressure difference increases. Thus a change rate of the flow path resistance in respect to change of the pressure difference is small compared to the first flow path 23.

For example, by adjusting the control voltage applied to the piezoelectric element 21, the volume of the pressure chamber 22 is reduced while giving a large pressure difference by quickly displacing the silicon diaphragm in a direction towards the inside of the pressure chamber 22, then the volume of the pressure chamber 22 is increased while giving a small pressure difference by slowly displacing the silicon diaphragm in a direction towards the outside of the pressure chamber 22, whereby the drive fluid is fed from the right to the left in Fig. 10 in a negative direction.

Contrary to the above, the volume of the pressure chamber 22 is increased while giving a large pressure difference by quickly displacing the silicon diaphragm in a direction towards the outside of the pressure chamber 22, then the volume of the pressure chamber 22 is reduced while giving a small pressure difference by slowly displacing the silicon diaphragm in a direction towards the inside of the pressure chamber 22, whereby the drive fluid is fed from the left to the right in the figure thereof in a positive direction.

Meanwhile, a difference of the change rate of the flow path resistance in respect to change of the pressure difference in the first flow path 23 and the second flow path 24 is not always necessary to be caused by the difference of the length of the flow path, and may caused by a difference in shapes.

Flow amount control through the micropump 12 is realized by adjusting a voltage applied to the piezoelectric element 21. A maximum voltage applied to the piezoelectric element is about several volts to several tens of a volt and 100 volt at a maximum. The cycle of the drive voltage is about 11 KHz.

Two electrodes to drive the piezoelectric element 21 are connected with flexible wires. One electrode of the piezoelectric element 21 is connected with a gold electrode electrically by forming a gold electrode on a surface of the silicon diaphragm and by bonding one surface of the piezoelectric element 21 onto the gold electrode with an adhesive, and the gold electrode thereof and the flexible wire are connected. Also, gold plating is applied on the other surface of the piezoelectric element 21, and the flexible wire is directly connected to the gold plated portion thereof.

Meanwhile, other substrate than the silicon substrate can be used as the substrate to form the micropump 12, for example, a photoconductive glass.

Also, as the micropump, other than the piezoelectric pump, for example, a check valve type pump can be formed. In the present embodiment a piezoelectric pump is preferably used.

As the glass substrates 18 and 19 which are laminated on the silicon substrate 17, for example, Pyrex^{™} glass (Pyrex is a trade mark of Corning Glass Works) and Tempax^{™} glass (Tempax is a trade mark of Schott Glasswerk) can be used.

In Fig. 10, the micropump 20 supplies the drive fluid from the opening 15, through the flow path 20. On the substrate 19, the flow path 20 is patterned. As an example, a shape and dimensions of the flow path 20 are that a cross section is rectangular, a width is about 150 µm and a depth is about 300µm. At a downstream side of the flow path 20, there is provide an opening 15 to communicate the micropump 20 with the micro flow path of the examination chip by positioning the opening 15 with the openings 32a to 32k of the pump connection section in the examination chip in Fig. 8. The opening 15 of the chip connection section can be formed larger than the width of the flow path 20 where needed so that positioning of the opening of the examination chip with the opening 15 of the chip connection section can be carried out appropriately. As Fig. 4 shows, since the drive fluid can be ejected from the opening 15 provided at a desired position on the chip surface of the micropump unit 11, a leading flow path to feed the drive fluid to a discretionary position can be omitted or reduced.

An upstream side of the flow path 20 is communicated with the micropump 20 via a through hole 16b on the substrate 18, through a flow path provided on the substrate 17. Also, the upstream side of the micropump 12 is communicated with an opening 14 provided on the glass substrate 19 via a through hole 16a of the substrate 18, through a flow path provided on the substrate 17. The opening 14 is connected to an unillustrated drive fluid tank. The opening 14 is connected via a silicone resin packing.

Meanwhile, the micropump unit thereof is merely an example and various kinds of micropump unit on which a connection openings to communicate with the micropump, flow path, examination chip and drive fluid tank are formed can be formed by photolithography technology. For example, there can be configured a micropump unit where a silicon substrate on which a structure of the micropump is formed through etching, a glass substrate is laminated on the photoconductive glass substrate, PDMS is further laminated thereon, and further more a substrate formed with a plastic resin, glass, silicon or ceramic on which a flow path groove and a connection opening are formed is laminated thereon.

In the embodiment in Fig. 4, a piezoelectric pump is used as the micropump. The openings 15a, 15b and 15c are respectively communicated with the openings 32c, 32d and 32e of the examination chip in Fig. 8. The micropump 12 feeds the drive fluid through the flow path 20, the opening 15 and opening 32 and pushes the reagent contained in the reagent containing section 33 to the downstream side.

### <Analyte and Target Substance>

The micro total analysis system of the present invention can be preferably applied to examination of which target substance is various biological substances such as gene and nucleic acid. The examination chip for the biological substance other than the gene such as protein, enzyme has a substantially the same configuration. Usually, the reagents and buffer solutions (used for dilution and washing) have only to be changed. In the case thereof, allocation and number of the fluid feeding element may be changed. One skilled in the art can change kind of analysis readily by providing necessary elements on the examination chip, for example, for immunoassay method and applying slight modification including change of the flow path and specifications.

As above while the embodiments of the present invention have been described, the present invention is not limited to the embodiments thereof and changes and variations may be made without departing from the spirit of the invention.

## Claims

1. A micro total analysis system, comprising:
an examination chip provided with a succession of a micro flow path and a flow path opening section at an upstream side of a containing position of a reagent in the micro flow path, wherein the flow path opening section is communicated with a micropump;
a drive fluid tank to contain a drive fluid which pushes the reagent the upstream side to a downstream side of the micro flow path of the examination chip;
a micropump unit provided with a plurality of the micropumps at each position on a surface of a chip, wherein an upstream side of each micropump is communicated with the drive fluid tank and at the downstream side thereof, a flow path opening section communicated with the micro flow path of the examination chip is provided;
a system main body wherein the micropump unit and the drive fluid tank are integrated and stored in a storing body; and
a mechanism to change a direction of liquid feeding pressure at the flow path opening section of the micropump unit in response to detaching and attaching of the examination chip while carrying out analysis of the analyte in a state where the examination chip is attached to the system device main body;
wherein after the examination chip is connected to the micropump unit in a way that the flow path opening sections are overlapped, the micropump feeds the drive fluid to the micro flow path of the examination chip to push out the reagent to the downstream side so that the reagent and the analyte are merged and reacted, and the reaction is detected, whereby a target substance in the analyte is analyzed.

2. The micro total analysis system of claim 1, wherein all the micropumps in the micropump unit are connected to a single drive fluid tank so that the drive fluid stored in the drive fluid tank is fed through each micropump to the micro flow path of the examination chip.

3. The micro total analysis system of claim 1 or 2, wherein a pressure opposite to an ejection direction of the micropump is applied at the flow path opening section of the micropump unit being connected to the examination chip at least when the examination chip is detached from the flow path opening section of the micropump unit.

4. The micro total analysis system of any one of claims 1 to 3, wherein the pressure opposite to the ejection direction of the micropump is applied as a negative pressure at the flow path opening section of the micropump unit being connected to the examination chip only when the examination chip is detached from the flow path opening section of the micropump unit.

5. The micro total analysis system of claim 3 or 4, wherein the opposite pressure or the negative pressure is created by lowering a fluid surface of the drive fluid tank than a connection section to the examination chip.

6. The micro total analysis system of any one of claims 1 to 5, wherein the drive fluid tank can be move up and down.

7. The micro total analysis system of any one of claims 1 to 4, wherein the pressure of the drive fluid at the flow path opening section of the micropump unit is changed through a negative pressure generation mechanism attached to a cartridge type drive fluid tank.

8. The micro total analysis system of claim 7, wherein the negative pressure generation mechanism creates the pressure through a bias force created by a restitution force of an elastic substance.

9. The micro total analysis system of any one of claims 1 to 8, wherein an absolute value of the negative pressure is 5 mmAq at a maximum.

10. The micro total analysis system of any one of claims 1 to 9, wherein the micropump comprises;
a first flow path, wherein a flow path resistance varies with a pressure difference,
a second flow path, wherein a change rate of the flow path resistance in respect to a change of the pressure difference is smaller than that of the first flow path,
a pressure chamber connected to the first flow path and the second flow path, and
an actuator driven by voltage so as to change an inner pressure of the pressure chamber.
